# EUROPÄISCHE PATENTSCHRIFT

(11) **EP 1 107 440 B1**
(45) Veröffentlichungstag und Bekanntmachung des Hinweises auf die Patenterteilung: **18.07.2007**
(21) Anmeldenummer: 00126137.9
(22) Anmeldetag: 30.11.2000
(51) Int. Cl.: H02P 1/16, H02P 1/18, G01R 31/01, H02M 7/12

(54) **Verfahren und Schaltungsanordnung zum Einschalten einer Leistungsendstufe**
Method and circuit for switching on a power output stage
Méthode et circuit pour mise en circuit d'un étage de puissance

(30) Priorität: 06.12.1999 DE 19958724; 16.11.2000 DE 10057156
(43) Veröffentlichungstag der Anmeldung: 13.06.2001
(73) Patentinhaber: SIEMENS AKTIENGESELLSCHAFT, 80333 München (DE)
(72) Erfinder: Joch, Christoph, 65824 Schwalbach (DE)

(56) Entgegenhaltungen:
- JP-A- 10 014 104
- US-A- 5 483 142
- US-A- 5 804 973

## Beschreibung

Die Erfindung betrifft ein Verfahren zum Einschalten einer Leistungsendstufe für Elektromotoren mit hoher Stromaufnahme sowie eine Schaltungsanordnung zur Durchführung des Verfahrens.

Aus der US-5,804,973-A ist ein System zur Bestimmung des Verschleißes eines parallel zu einem Umrichter geschalteten Kondensators in einem Elektrofahrzeug bekannt, wobei der Kondensator vor dem Losfahren des Elektrofahrzeugs für eine gewisse Zeitdauer aufgeladen und die dabei am Kondensator auftretende Spannungsänderung gemessen wird.

Weiterhin offenbaren die JP-10014104-A und die US-5,483,142-A Schaltkreise zur Vorladung von Kondensatoren.

In Kraftfahrzeugen werden in zunehmendem Maße auch solche Elektromotoren eingesetzt, die beim Anlaufen, Abbremsen oder bei einem Richtungswechsel einen sehr hohen Strom aufnehmen. Derartige Elektromotoren dienen beispielsweise für Fensterheber oder zur Realisierung eines Ventilhubes in der Brennkraftmaschine. Um bei diesen hohen Stromspitzen, die beispielsweise etwa 100 A betragen können, eine konstante Versorgungsspannung für die Endstufe sicherzustellen, kann die Endstufe mit im allgemeinen mehreren Elektrolytkondensatoren gepuffert werden, die eine große Kapazität von beispielsweise 3000 pF und einen sehr geringen Innenwiderstand von einigen mOhm aufweisen. Ein zum Ein- und Ausschalten der Endstufe dienendes Relais wird wegen des extrem geringen Innenwiderstandes der Kondensatoren beim Einschalten mit einem sehr hohen Stromimpuls belastet, beispielsweise 200 A. Diese starke Belastung des Relais erfordert eine entsprechende Auslegung, obwohl es für den eigentlichen Betriebsfall für geringere Ströme ausgelegt sein kann.

Aufgabe der vorliegenden Erfindung ist es, ein Verfahren und eine Schaltungsanordnung anzugeben, mit welcher derartig hohe Stromimpulse beim Einschalten vermieden werden können und somit ein für geringere Ströme ausgelegtes Relais verwendet werden kann.

Erfindungsgemäß wird die Aufgabe durch die kennzeichnenden Merkmale der unabhängigen Ansprüche 1 und 5 gelöst.

Die Erfindung hat den Vorteil, dass durch die Vorladung des Kondensators das Fließen von schädlichen Einschaltströmen verhindert wird. Erst wenn eine Spannung am Kondensator erreicht wird, bei welcher kein schädlicher Einschaltstrom mehr fließt, wird die Betriebsspannung angelegt.

Die Umschaltung von der Vorladephase auf die Betriebsspannung kann dabei auf verschiedene Art und Weise erfolgen.

In einer Ausgestaltung wird der mindestens eine Kondensator in einer vorgegebenen Zeit mit dem begrenzten Strom aufgeladen.

Alternativ dazu wird der mindestens eine Kondensator solange mit dem begrenzten Strom vorgeladen, bis die Spannung an dem Kondensator einen vorgegebenen Wert erreicht.

In einer anderen Weiterbildung der Erfindung wird der mindestens eine Kondensator solange aufgeladen, bis die Differenz der Betriebsspannung und der Spannung an dem mindestens einen Kondensator einen vorgegebenen Wert unterschreitet.

Bei der erfindungsgemäßen Schaltungsanordnung wird die Aufgabe dadurch gelöst, daß die Endstufe und mindestens ein dazu parallelgeschalteter Puffer-Kondensator über ein Relais mit einer Betriebsspannungsquelle verbunden ist, daß eine einen begrenzten Strom liefernde Stromquelle unter Umgehung des Relais an den mindestens einen Kondensator angeschlossen ist und daß eine Verzögerungseinrichtung vorgesehen ist, die das Relais erst einschaltet, wenn der mindestens eine Kondensator mit Hilfe der Stromquelle etwa auf die Betriebsspannung aufgeladen ist.

Die erfindungsgemäße Schaltungsanordnung erspart den Einsatz eines teuren Hochlast-Relais und verringert dabei die Funkenbildung beim Einschalten, entlastet die Relais-Kontakte und erhöht damit die Lebensdauer des Relais. Ein weiterer Vorteil der erfindungsgemäßen Schaltungsanordnung besteht darin, daß die mit hohen Stromimpulsen verbundenen elektromagnetischen Störungen vermieden werden.

Der elektronische Aufwand zur Realisierung der erfindungsgemäßen Schaltungsanordnung ist äußerst gering, insbesondere wenn die Stromquelle und das Relais von einem Controller steuerbar sind. Häufig wird dazu ein ohnehin zur Steuerung der Endstufe erforderlicher Controller verwendbar sein. Eine Realisierung der Verzögerungseinrichtung in herkömmlicher Schaltungstechnik ist jedoch nicht ausgeschlossen. Die erfindungsgemäße Schaltungsanordnung, die in der Regel im gleichen Gehäuse wie die Endstufe und die Kondensatoren eingebaut ist, benötigt keinerlei zusätzlichen Aufwand wie Verkabelung oder Steckverbinder.

Eine vorteilhafte Ausgestaltung der Erfindung besteht darin, daß das Relais nach einer vorgegebenen Zeit nach dem Einschalten der Stromquelle eingeschaltet wird. Diese ist besonders einfach zu verwirklichen und führt zu einer deutlichen Verringerung des Stromimpulses beim Einschalten.

Je nach den Umständen im einzelnen kann auch eine andere vorteilhafte Ausgestaltung angewendet werden, bei der das Relais erst eingeschaltet wird, wenn die Spannung an dem mindestens einen Kondensator einen vorgegebenen Wert erreicht.

Eine noch stärkere Verringerung des Stromimpulses beim Einschalten ist bei einer weiteren Ausgestaltung dadurch möglich, daß das Relais erst eingeschaltet wird, wenn die Differenz der Betriebsspannung und der Spannung an dem mindestens einen Kondensator einen vorgegebenen Wert unterschreitet.

Die Erfindung läßt zahlreiche Ausführungsformen zu. Drei davon sind schematisch in der Zeichnung anhand mehrerer Figuren dargestellt und nachfolgend beschrieben. Es zeigt:
- Figur 1: ein erstes Ausführungsbeispiel,
- Figur 2: den Verlauf der Kondensatorspannung beim Einschalten,
- Figur 3: ein zweites Ausführungsbeispiel und
- Figur 4: ein drittes Ausführungsbeispiel.

Gleiche Teile sind in den Figuren mit gleichen Bezugszeichen versehen.

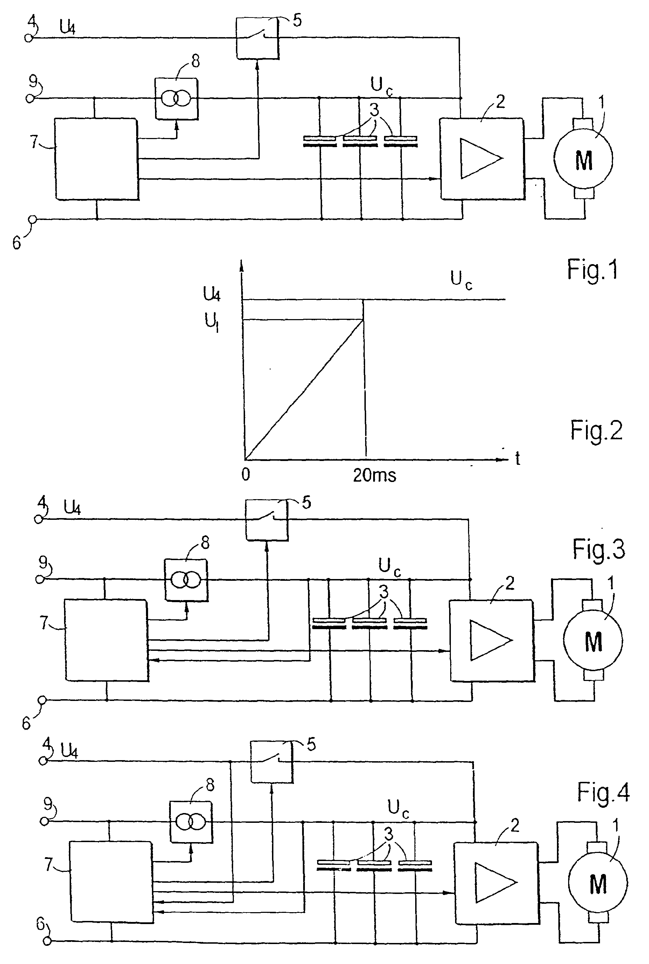

Bei den in den Figuren 1, 3 und 4 dargestellten Ausführungsbeispielen wird ein Motor 1 von einer Endstufe 2 mit in der Regel pulsbreitenmodulierten Strömen versorgt, wozu die Endstufe 2 von einem Controller 7 angesteuert wird. Der Controller 7 ist dabei als Steuerelektronik der Endstufe 2 ausgebildet. Wegen der eingangs erwähnten hohen Stromaufnahme beim Anfahren des Motors 1 ist die Betriebsspannung der Endstufe 2 mit Elektrolytkondensatoren 3 gepuffert. Die Endstufe 2 und die Elektrolytkondensatoren 3 sind über ein Relais 5 und über einen Anschluß 4 mit der Betriebsspannung verbunden. Der andere Anschluß 6 für die Betriebsspannung ist im Kraftfahrzeug in der Regel mit Masse verbunden.

Wird die Schaltungsanordnung eingeschaltet, erhält zunächst der Controller 7 über einen Anschluß 9 Betriebsspannung, der eine Stromquelle 8 derart ansteuert, daß die Kondensatoren 3 mit einem begrenzten Strom aus der Versorgung des Controllers 7 aufgeladen werden. Ist bei dem Ausführungsbeispiel nach Figur 1 eine vorgegebene Zeit von beispielsweise 20 ms vergangen (Figur 2), wird vom Controller 7 die Stromquelle 8 abgeschaltet und das Relais 5 eingeschaltet, so daß der Kondensator schlagartig auf die bei 4 zugeführte Betriebsspannung U4 aufgeladen wird. Der dabei entstehende Stromimpuls ist jedoch wesentlich kleiner als beim Einschalten der ungeladenen Kondensatoren 3, nämlich im Verhältnis (U₄-U₁)/U₄.

Bei dem Ausführungsbeispiel nach Figur 3 wird die am Kondensator anliegende Spannung Uc einem Eingang des Controllers 7 zugeführt, der nicht zeitabhängig, sondern in Abhängigkeit davon, ob die Spannung Uc einen vorgegebenen Wert überschreitet, das Relais 5 einschaltet.

Figur 4 zeigt ein Ausführungsbeispiel, bei welchem nicht der Absolutwert der Spannung Uc zum Einschalten des Relais 5 herangezogen wird, sondern dazu zwischen den Spannungen U₄ und U_{C} die Differenz gebildet wird. Wenn diese klein genug ist, wird das Relais 5 eingeschaltet.

Es ist vorteilhaft, die Stromquelle 8 regel- und/oder steuerbar auszugestalten, um zu verhindern, daß bei Nichtanschluß der Leistungsversorgung der gesamte Strom über die Steuerelektronikversorgung fließt, was diese zerstören würde.

## Patentansprüche

1. Verfahren zum Einschalten einer Leistungsendstufe (2) in einem Kraftfahrzeug, die einen Elektromotor (1) mit hoher Stromaufnahme versorgt, wobei die Endstufe (2) und mindestens ein dazu parallel geschalteter Puffer-Kondensator (3) über ein Relais (5) mit einer Betriebsspannungsquelle (4) verbunden sind, **dadurch gekennzeichnet, dass** der Kondensator (3) zunächst mit einem begrenzten Strom vorgeladen wird und dass erst, wenn eine Spannung am Kondensator erreicht ist, bei welcher kein für das Relais schädlicher Einschaltstrom mehr fließt, die Betriebsspannung angelegt wird.

2. Verfahren nach Anspruch 1, **dadurch gekennzeichnet, dass** der mindestens eine Kondensator (3) in einer vorgegebenen Zeit mit dem begrenzten Strom vorgeladen wird.

3. Verfahren nach Anspruch 1, **dadurch gekennzeichnet, dass** der mindestens eine Kondensator (3) so lange mit dem begrenzten Strom vorgeladen wird, bis die Spannung an dem mindestens einen Kondensator (3) einen vorgegebenen Wert erreicht.

4. Verfahren nach Anspruch 1, **dadurch gekennzeichnet, dass** der mindestens eine Kondensator (3) so lange vorgeladen wird, bis die Differenz der Betriebsspannung und der Spannung an dem mindestens einen Kondensator (3) einen vorgegebenen Wert unterschreitet.

5. Schaltungsanordnung in einem Kraftfahrzeug zum Einschalten einer Leistungsendstufe (2), die einen Elektromotor (1) mit hoher Stromaufnahme versorgt, wobei die Endstufe (2) und mindestens ein dazu parallel geschalteter Puffer-Kondensator (3) über ein Relais (5) mit einer Betriebsspannungsquelle verbunden sind und wobei eine einen begrenzten Strom liefernde Stromquelle (8) unter Umgehung des Relais (5) an den mindestens einen Kondensator (3) angeschlossen ist, **dadurch gekennzeichnet, dass** eine Verzögerungseinrichtung (7) vorgesehen ist, die das Relais (5) erst einschaltet, wenn der mindestens eine Kondensator (3) mit Hilfe der Stromquelle (8) auf eine Spannung vorgeladen ist, bei welcher kein für das Relais (5) schädlicher Einschaltstrom mehr fließt.

6. Schaltungsanordnung nach Anspruch 5, **dadurch gekennzeichnet, dass** die Stromquelle (8) und das Relais (5) von einem Controller (7) steuerbar sind.

7. Schaltungsanordnung nach einem der Ansprüche 5 oder 6, **dadurch gekennzeichnet, dass** das Relais (5) nach einer vorgegebenen Zeit nach dem Einschalten der Stromquelle (8) eingeschaltet wird.

8. Schaltungsanordnung nach einem der Ansprüche 5 oder 6, **dadurch gekennzeichnet, dass** das Relais (5) erst eingeschaltet wird, wenn die Spannung an dem mindestens einen Kondensator (3) einen vorgegebenen Wert erreicht.

9. Schaltungsanordnung nach einem der Ansprüche 5 oder 6, **dadurch gekennzeichnet, dass** das Relais (5) erst eingeschaltet wird, wenn die Differenz der Betriebsspannung und der Spannung an dem mindestens einen Kondensator (3) einen vorgegebenen Wert unterschreitet.

## Claims

1. Method for switching on a power output stage (2) in a motor vehicle, which supplies an electric motor (1) having a high current draw, with the output stage (2) and at least one buffer capacitor (3) connected in parallel therewith being connected to an operating voltage source (4) via a relay (5), **characterised in that** the capacitor (3) is first precharged with a limited current and the operating voltage is not applied until the voltage at the capacitor reaches a level at which an inrush current, which is damaging to the relay, no longer flows.

2. Method according to claim 1, **characterised in that** the at least one capacitor (3) is precharged with the limited current in a predetermined time.

3. Method according to claim 1, **characterised in that** the at least one capacitor (3) is precharged with the limited current, until the voltage at the at least one capacitor (3) reaches a predetermined value.

4. Method according to claim 1, **characterised in that** the at least one capacitor (3) is precharged, until the difference between the operating voltage and the voltage at the at least one capacitor (3) falls below a predetermined value.

5. Circuit arrangement in a motor vehicle for switching on a power output stage (2), which supplies an electric motor (1) having a high current draw, with the output stage (2) and at least one buffer capacitor (3) connected in parallel therewith being connected to an operating voltage source via a relay (5) and with a current source (8), which supplies a limited current, being connected to the at least one capacitor (3), bypassing the relay (5), **characterised in that** a delay device (7) is provided, which does not switch the relay (5) on until the at least one capacitor (3) has been precharged with the aid of the current source (8) to a voltage, at which an inrush current, which is damaging to the relay (5), no longer flows.

6. Circuit arrangement according to claim 5, **characterised in that** the voltage source (8) and relay (5) can be controlled by a controller (7).

7. Circuit arrangement according to one of claims 5 or 6, **characterised in that** the relay (5) is switched on at a predetermined time after the current source (8) has been switched on.

8. Circuit arrangement according to one of claims 5 or 6, **characterised in that** the relay (5) is not switched on until the voltage at the at least one capacitor (3) reaches a predetermined value.

9. Circuit arrangement according to one of claims 5 or 6, **characterised in that** the relay (5) is not switched on until the difference between the operating voltage and the voltage at the at least one capacitor (3) falls below a predetermined value.

## Revendications

1. Procédé pour enclencher un étage final de puissance (2) dans un véhicule automobile, en alimentant un moteur électrique (1) avec une admission de courant élevée, l'étage final (2) et au moins un condensateur-tampon (3), branché en parallèle avec lui, étant reliés par un relais (5) avec une source de tension de fonctionnement (4),
**caractérisé en ce que** le condensateur (3) est d'abord chargé préalablement avec un courant limité et **en ce que** la tension de fonctionnement est appliquée seulement si, au condensateur (3), est atteinte une tension pour laquelle il ne passe plus aucun courant d'enclenchement dommageable pour le relais.

2. Procédé suivant la revendication 1, **caractérisé en ce que** le condensateur (3), au moins au nombre de un, est chargé préalablement, dans un temps prédéfini, avec le courant limité.

3. Procédé suivant la revendication 1, **caractérisé en ce que** le condensateur (3), au moins au nombre de un, est chargé préalablement avec le courant limité, jusqu'à ce que la tension au condensateur (3), au moins au nombre de un, ait atteint une valeur prédéfinie.

4. Procédé suivant la revendication 1, **caractérisé en ce que** le condensateur (3), au moins au nombre de un, est chargé préalablement avec le courant limité jusqu'à ce que la différence entre la tension de fonctionnement et la tension au condensateur (3), au moins au nombre de un, soit inférieure à une valeur prédéfinie.

5. Disposition de circuit dans un véhicule automobile pour enclencher un étage final de puissance (2) alimentant un moteur électrique (1) avec une admission de courant élevée, l'étage final (2) et au moins un condensateur-tampon (3) branché en parallèle avec lui étant reliés par un relais (5) à une source de tension de fonctionnement, et une source de courant (8) fournissant un courant limité étant raccordée, en dérivation autour du relais (5), au condensateur (3), au moins au nombre de un,
**caractérisée en ce qu'**il est prévu un dispositif de retard (7) qui enclenche le relais (5) seulement quand le condensateur (3), au moins au nombre de un, a été préalablement chargé à l'aide de la source de courant (8) à une tension pour laquelle il ne passe plus aucun courant d'enclenchement dommageable pour le relais (5).

6. Disposition de circuit suivant la revendication 5, **caractérisée en ce que** la source de courant (8) et le relais (5) peuvent être commandés par un contrôleur (7).

7. Disposition de circuit suivant l'une des revendications 5 ou 6, **caractérisée en ce que** le relais (5) est enclenché après un temps prédéfini, après l'enclenchement de la source de courant (8)

8. Disposition de circuit suivant l'une des revendications 5 ou 6, **caractérisée en ce que** le relais (5) est enclenché seulement si la tension au condensateur (3), au moins au nombre de un, a atteint une valeur prédéfinie.

9. Disposition de circuit suivant l'une des revendications 5 ou 6, **caractérisée en ce que** le relais (5) est seulement enclenché si la différence entre la tension de fonctionnement et la tension au condensateur (3), au moins au nombre de un, passe en dessous d'une valeur prédéfinie.
